Europäisches Patentamt

European Patent Office

Office européen des brevets

(11) Publication number: **0 204 665**
**B1**

## (12) EUROPEAN PATENT SPECIFICATION

(45) Date of publication of patent specification: **18.10.89**

(51) Int. Cl.⁴: **B 60 K 17/344,** B 60 K 23/08

(21) Application number: **86830129.2**

(22) Date of filing: **19.05.86**

(54) **Integral drive transmission for motor cars with a device for engaging and disengaging the drive to a second axle.**

(30) Priority: **29.05.85 IT 6749685**

(43) Date of publication of application:
**10.12.86 Bulletin 86/50**

(45) Publication of the grant of the patent:
**18.10.89 Bulletin 89/42**

(84) Designated Contracting States:
**DE FR GB IT SE**

(56) References cited:
**EP-A-0 066 945**
**AT-B- 375 881**
**DE-A-3 536 682**
**DE-B-1 113 639**
**FR-A-2 464 163**
**FR-A-2 471 878**
**FR-A-2 516 457**
**FR-A-2 530 553**
**GB-A-2 057 070**
**GB-A-2 088 975**
**US-A-2 770 150**
**US-A-3 058 558**

(73) Proprietor: **FIAT AUTO S.p.A.**
**Corso Giovanni Agnelli 200**
**I-10135 Torino (IT)**

(72) Inventor: **Venesio, Walter**
**Via S. Bernardino 2**
**I-10141 Torino (IT)**
Inventor: **Belmondo, Luigi**
**Via Bocciofila 5**
**I-10053 Bussoleno (Torino) (IT)**

(74) Representative: **Buzzi, Franco et al**
**c/o Jacobacci-Casetta & Perani S.p.A. Via Alfieri,**
**17**
**I-10121 Torino (IT)**

(56) References cited:
**DESIGN ENGINEERING, vol. 52, no. 9,**
**September 1981, pages 38-44, Waseca,**
**Minesota, US; D. McCORMICK: "Power trains:**
**doing more with less"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates in general to motor cars with integral drives provided with a device for engaging and disengaging the drive to the said axle.

More particularly, the invention concerns an integral drive transmission for motor cars, of the type comprising a gearbox-differential unit for transmission of drive to a pair of drive shafts connected to a first pair of wheels of the car, the gearbox-differential unit being provided with a power take-off for transmission of the drive to a propeller shaft which drives a secondary differential for transmitting the drive to a pair of drive shafts connected to a second pair of wheels of the car, and means for engaging and disengaging the drive for the second pair of wheels, including an externally controlled main clutch for coupling and uncoupling the propeller shaft and the power take-off of the gearbox-differential unit.

In transmissions of this type, for instance generally known from IT—A—67263/83, when the clutch is in the engaged position, that is, coupling the power take-off with the propeller shaft for rotation, the wheels of the second pair are also driving. Conversely, when the clutch is in the disengaged position, whereby the propeller shaft is uncoupled from the power take-off, the wheels of the second pair are simply load-bearing. During movement of the vehicle in this second condition, the wheels of the second pair rotate the gears of the secondary differential and the propeller shaft through the respective drive shafts, resulting in useless dissipation of power. Moreover, the continual rotation of the gears of the secondary differential even during movement of the car with drive at only one axle can be the source of unnecessary stresses and wear on the gears.

Systems are already known, for instance those manufactured and marketed by Italian firm FOUR WHEELER ITALIANA under the trademark "DUALMATIC", which permit the coupling and uncoupling of the second pair of wheels of the car with respect to the secondary differential and the propeller shaft by means of two secondary clutches. These systems are generally inconvenient for the user in that they normally require the stopping of the car, the effecting of a short reverse run of the vehicle or actual descent from the vehicle in order to work the clutches from the outside.

Operating the two secondary clutches by electrically controlled fluid actuators is generally known from FR—A—2464163, wherein engagement of the two secondary clutches (i.e. insertion of the integral transmission drive) corresponds to the activated condition of respective fluid actuators. In this case damage or failure in the electrical or fluid circuits of the two actuators would prevent maintaining or actuating insertion of the integral drive transmission.

The object of the present invention is to avoid these disadvantages and to provide a transmission of the aforesaid type, which will allow a more convenient, easier and safe working of the clutches on board the vehicle, without requiring either its stopping or special manoeuvres. According to the invention this purpose is achieved by virtue of the features recited in Claim 1.

Due to this features, on one hand, insertion and release of the integral drive can be rapidly carried out by the driver, simply operating a suitable control (normally a switch operatively connected to the clutch actuators) provided within the car compartment. On the other hand, keeping the integral drive engaged in the disabled condition of the ignition and start switch of the vehicle (i.e. when the vehicle is inoperative), avoids the risk of unsuccessful attempt of insertion thereof in case of need, when restarting the vehicle, under particular environment conditions (such as at low temperature) or due to electric defects which might cause inoperativeness of the clutch actuators.

Further characteristics and advantages of the invention will become apparent from the detailed description which follows with reference to the accompanying drawings provided purely by way of nonlimiting example, in which:

Figure 1 is a diagrammatic perspective view of an integral drive transmission for motor cars according to the invention,

Figure 2 is an elevational view in the direction of arrow II of Figure 1 on an enlarged scale,

Figure 3 is a section along the line III—III of Figure 2,

Figure 4 is a cross-section on the line IV—IV of Figure 2,

Figure 5 is a section along the line V—V of Figure 1,

Figure 6 is a section along the line VI—VI of Figure 5,

Figure 7 illustrates a variant of a part of Figure 3, and

Figure 8 is a diagrammatic view of the electric control of the transmission.

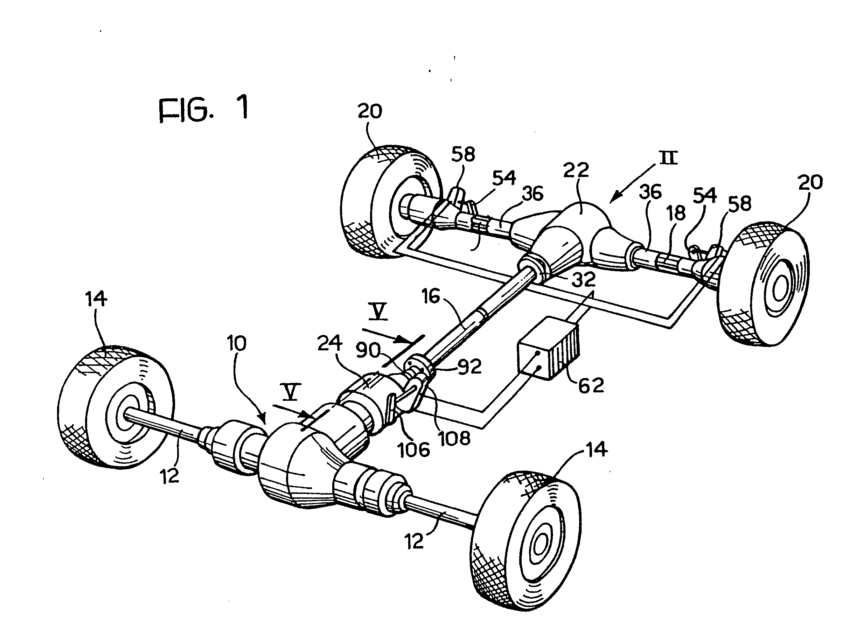

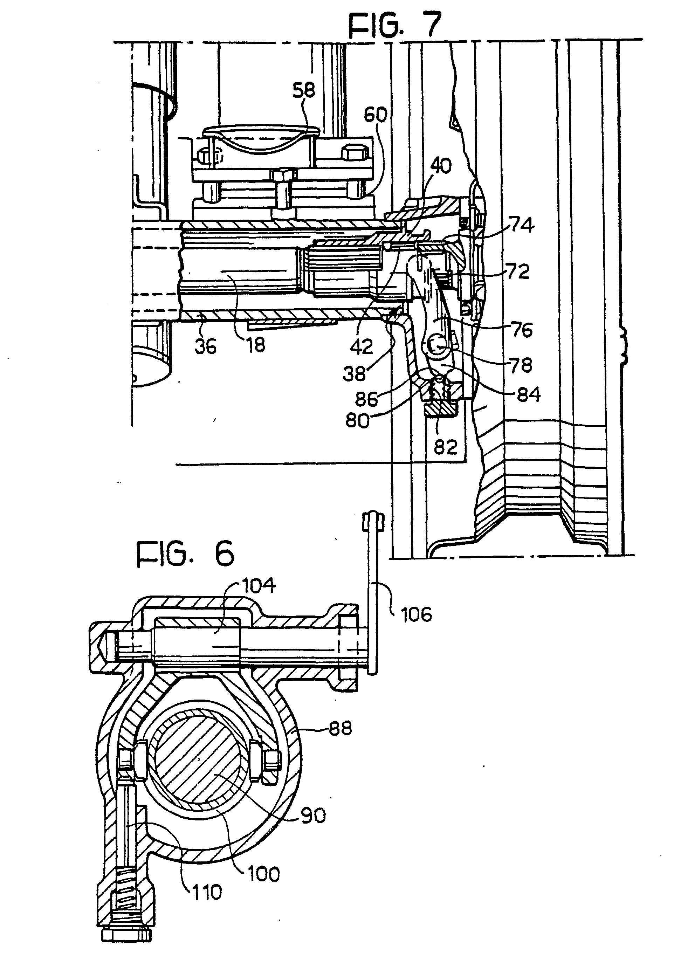

Referring initially to Figure 1, the integral drive transmission according to the invention comprises essentially a gearbox-differential unit 10 for the transmission of drive from the engine (not illustrated) of the vehicle to two drive shafts 12 bearing the front wheels 14, and a longitudinal propeller shaft 16 which can be driven by the gearbox-differential unit 10 for transmission of the drive to two drive shafts 18 of the rear wheels 20 through a rear differential 22. The propeller shaft 16 is driven by the gearbox-differential unit 10 through an engagement and disengagement device, generally indicated 24, which allows the drive to the rear wheels 20 to be engaged and disengaged and which will be described in detail below with reference to Figures 5 and 6.

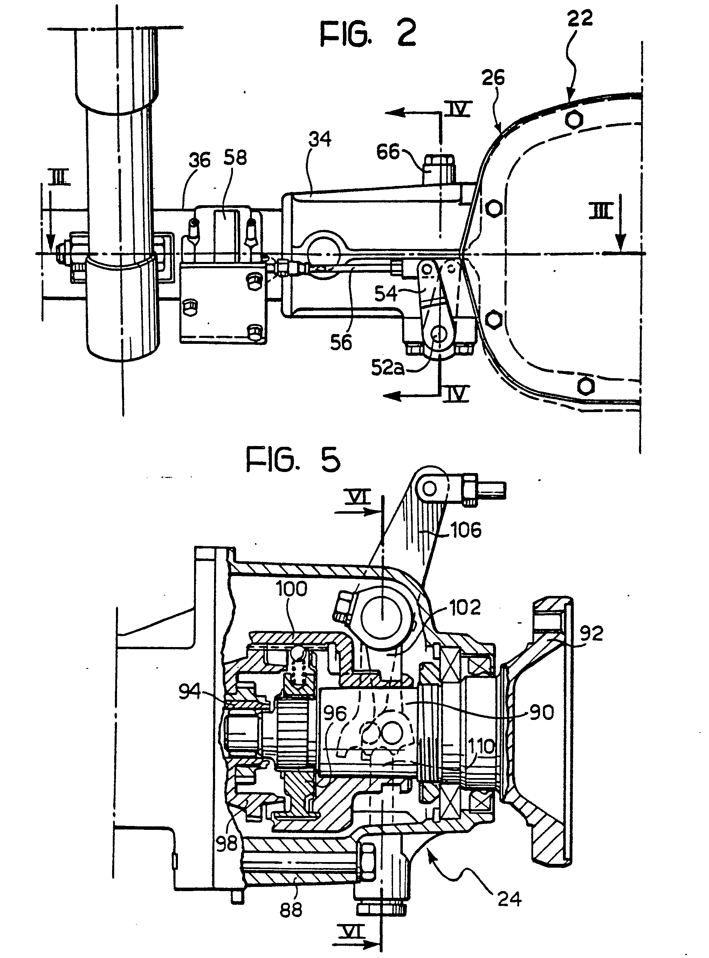

Referring now in greater detail to Figures 2 to 4, the secondary differential 22 comprises, in known manner, a housing 26 having a central tubular appendage 28 within which extends an input shaft 30 connected at 32 to the propeller shaft 16, and two lateral appendages 34 from which two tubular casings 36 containing the drive shafts 18 extend.

According to the invention, the inner ends of the two drive shafts 18 are connected to the secondary differential 22 by two clutches 38 by means of which the rear wheels 20 can be rotationally coupled and uncoupled with respect to the differential 22 and the propeller shaft 16.

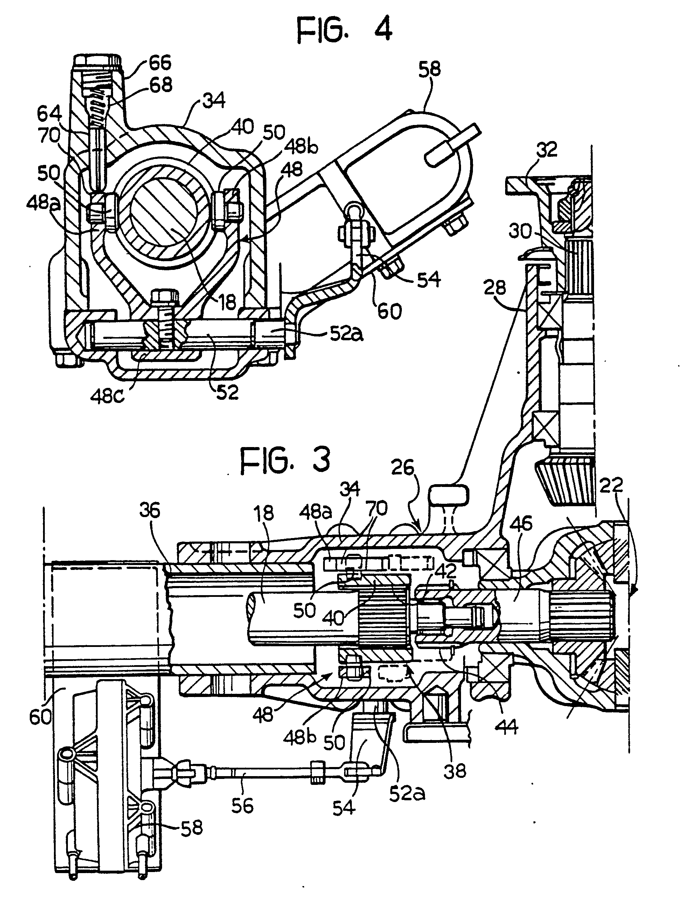

Each clutch 38 comprises an internally-splined sleeve 40 mounted slidably on a splined portion 42 of the respective drive shaft 18 and engageable with a corresponding splined portion 44 of an output shaft 46 of the differential 22, which is aligned coaxially with the drive shaft 18. The sleeve 40 moves within the appendage 34 of the housing 26 between a disengaged position, illustrated in full outline in Figure 3, in which the drive shaft 18 is uncoupled from the outlet shaft 46, and an engaged position, illustrated in broken outline in the same Figure, in which the drive shaft 18 becomes fast for rotation with the output shaft 46.

Movement of the sleeve 40 between these positions is effected by a swinging fork 48 the arms 48a, 48b of which bear respective shoes 50 engaged with opposite sides of the sleeve 40, and the yoke 48c of which is fixed to a pin 52 supported rotatably within the tubular appendage 34 about an axis orthogonal to the axis of the sleeve 40. The shaft 52 has one end 52a which projects from the tubular appendage 34 and to which is fixed a lever 54 that is connected to a vacuum-operated pneumatic actuator 58 by a tie-rod 56. The two actuators 58 of the two clutches 38 are carried by support brackets 60 fixed to the respective tubular casings 36, and are connected to an electro-pneumatic control unit schematically indicated 62 in Figure 1. This control unit 62 is arranged to connect the actuators 58 selectively to a vacuum source or an exhaust, so as to control the movement of the respective levers 54 and forks 48 corresponding to the movement of the sleeves 40 between the engaged and the disengaged positions.

A retaining device is attached to each of the forks 48 to keep the respective sleeve 40 in the engaged position or the disengaged position. As illustrated in detail in Figure 4, this retaining device consists of a finger-like member 64 inserted in an appendage 66 of the tubular part 34 perpendicular to the axis of the sleeve 40 and the axis of the pin 52 and biased against the free end of the arm 48a of the fork 48 by a spring 68. This end has two engagement notches 70 (Figure 3) snap-engageable by the finger member 64.

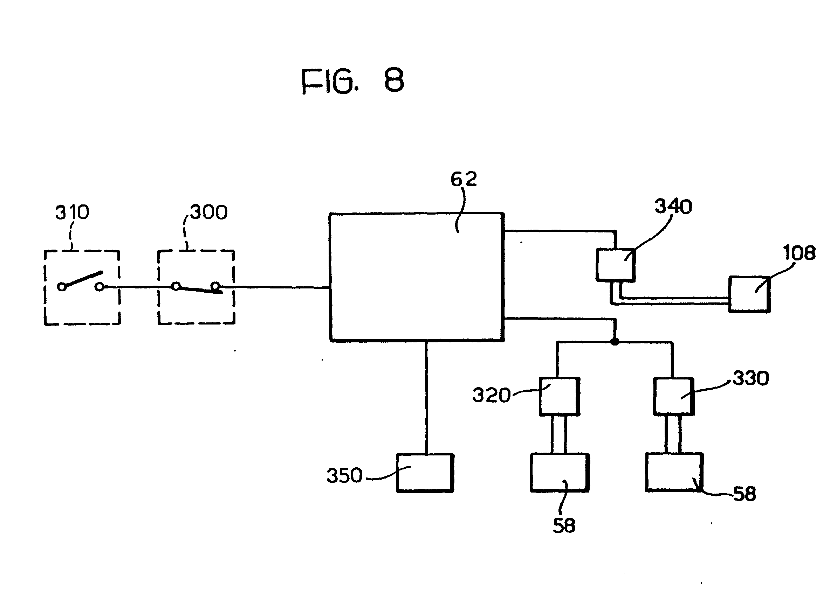

The retaining devices of the sleeves 40 could have a different form from that described above, for example that illustrated in the variant of Figure 8, in which parts identical or similar to those already described are indicated by the same reference numerals. This variant shows the application of the invention to a rear axle of slightly different construction from that described previously, in which the two drive shafts 18 inserted in the tubular casings 36 are connected directly to the differential 22, that is without the interposition of the output shafts 46. In this case, the clutch devices 38 are not fitted between the inner ends of the drive shafts 18 and the differential 22, but between the outer ends of the drive shafts 18 and the spindles 72 of the wheels 20.

Like the previous case, each clutch device 38 comprises a splined sleeve 40 which cooperates with splined portions 42, 74 of the drive shaft 18 and spindle 72 and is operated by a swinging fork 76 similar to the forks 48 and whose pin 78 is rotated by a vacuum-operated pneumatic actuator 58.

In this case, the sliding sleeve 40 is retained in the engaged or disengaged position by a ball 80 urged against an appendage 84 of the yoke of the fork 76 by a spring 82. This appendage 84 is provided with engagement notches or grooves 86 snap-engageable by the ball 80 in one position of the sleeve 40 or the other.

In this case, also, the actuators 58 are connected to an electro-pneumatic control unit 62 through which the drive of the rear wheels 22 can be engaged or disengaged by the occupants of the vehicle in an extremely convenient and practical manner.

According to another aspect of the invention, the control unit 62 acts to operate the clutch device 24 through which the propeller shaft 16 is coupled or uncoupled with respect to the gearbox-differential unit 10.

As illustrated in Figures 5 and 6, the clutch device 24 comprises a casing 88 within which is rotatably supported a shaft 90 having a flange 92 at one end for connection to the propeller shaft 16 and facing a power take-off 94 of the gearbox-differential unit 10 at its other end. The facing ends of the shaft 90 and the power take-off 94 carry respective gear wheels 96, 98 which can be coupled for rotation by an internally-splined sleeve 100 mounted on the shaft 90 for sliding between a position of disengagement, illustrated in Figure 5, in which the propeller shaft 16 and the power take-off 94 are disconnected, and an engaged position in which the shaft 16 and the power take-off 94 are coupled together in rotation. An intermediate ring 200 is provided to rotate the sleeve 100 and hence the whole downstream transmission, in the manner explained in the following, before the final engagement between the said sleeve 100 and the power take-off 94.

The sleeve 100 is moved by a fork 102 which is entirely similar to the forks 48 described previously and is mounted on a shaft 104 with one end projecting from the casing 88 and carrying a lever 106. The lever 106 is controlled by a vacuum-operated pneumatic actuator 108 similar to the actuators 58 and operated by the electro-pneumatic control unit 62.

This electro-pneumatic control unit 62 is arranged to cause a predetermined sequence of operations of the actuators such that, in the case of engaged integral drive, the control operated by the driver, for example by means of a simple push-button, will cause first the rotation and then engagement of the stationary transmission consisting of the shaft 16 and the rear differential 22, and subsequently the

3

coupling of the two rear wheels 20 relative to the drive shafts 18. The sequence caused by the electro-pneumatic control unit 62 in the case of disengaged integral drive, however, produces the almost simultaneous action of actuators 58 and 108 and thus the simultaneous release of the three clutches.

Moreover, such central control unit 62 is advantageously arranged to accomplish safety auxiliary functions according to what disclosed hereunder. It must be preliminarily pointed out that to the activated condition of actuators 58 and 108 correspond disengagement of the integral drive transmission, and vice versa, and that such actuators are of the storage-chamber type. Referring more in detail to Figure 8, with 300 is indicated the push button switch for engagement and disengagement of the integral drive transmission, which is placed downstream to the conventional ignition and start switch of the vehicle, shown with 310. The push button 300 is movable between a closed position shown in Figure 8, and an open position for actuating respectively energizing and de-energizing of pneumatic solenoid valves 320, 330 and 340 through which activation and disactivation (to which, as specified, disengagement and engagement of the integral drive transmission correspond) of actuators 58 and 108 is operated.

The disposition of the control unit 62 is such that with the switch 312 in the open position, the integral drive transmission is anyway engaged.

With switch 310 in the closed position and the push button 300 in the open position, solenoid valves 320, 330 and 340 are energized, and the integral drive transmission disengaged, while with switch 310 in closed position and push button 300 also in closed position, solenoid valves 320, 330 and 340 are de-energized, and the integral drive transmission disengaged. Engaging of the integral drive transmission by operating switch 300 with the car in motion can be subordinated to the vehicle speed detection, through a conventional speed sensor 350 connected to the control unit 62. This sensor 350 provides a consent to de-energizing of solenoid valves 320, 330 and 340, and thus to engaging of the integral drive transmission, solely when the vehicle speed detected is for instance lower than 50-60 km/h, while such consent is inhibited (thus keeping the solenoid valves 320, 330 and 340 in the de-energized condition notwithstanding closing of switch 300) if the vehicle speed exceeds the above mentioned speed without having engaged the integral drive transmission.

In summary, the functions that can be performed by the transmission through unit 62 can be summarized as follows:

| Switch 310 | Push button 300 | Speed sensor 350 | Solenoid valves 320, 330, 340 | 4 WD |
|---|---|---|---|---|
| open | — | — | — | engaged |
| closed | open | 0 | energized | disengaged |
| closed | closed | <50—60 km/h | de-energized | engaged |
| closed | closed | >50—60 km/h | energized | disengaged if not engaged before 50—60 km/h |

In the stage of operation of the actuator 108 to engage the integral drive, the intermediate ring 200 acts as a synchronizer to avoid jolts, noise, or breakage of the clutch, even during engagement with the car in motion.

A device for retaining the sleeve 100 in the engaged or disengaged position is also associated with the fork 102 and consists of a finger-like member 110 shaped and acting in a manner wholly analogous to the retaining members 64 described previously.

It will be clear from the foregoing that the operation of the actuators 58 and the actuator 108 by the unit 62 allows the selective engagement and disengagement of the drive to the rear axle of the vehicle in a very convenient and easy manner. The adoption of the clutch devices 38 between the wheels 20 and the differential 22, however, allows the rotational uncoupling of the wheels 20 from the secondary differential 22 and the propeller shaft 16 in the disengaged condition of the drive to the rear axle, advantageously avoiding the unnecessary dissipation of power.

Naturally the details of construction and forms of embodiment may be varied widely from that described and illustrated, without thereby departing from the scope of the present invention.

## Claims

1. Integral transmission for motor cars, comprising a gearbox-differential unit (10) for the transmission of drive to a pair of drive shafts (12) connected to a first pair of wheels (14) of the car, the gearbox-differential unit (10) being provided with a power take-off (94) for transmission of the drive to a propeller shaft (16) which drives a secondary differential (22) for transmitting the drive to a pair of drive shafts (18) connected to a second pair of wheels (20) of the motor car, and means for engaging and disengaging the drive for the second pair of wheels (20), including an externally-controlled main clutch (24) for coupling and uncoupling the propeller shaft (16) and the power take-off (94), and two externally-controlled secondary clutches (38) for selectively coupling and uncoupling the wheels of the second pair (20) relative to the secondary differential (22) and the propeller shaft (16), both the main clutch (24) and the two secondary clutches (38) being operated by electrically-controlled fluid actuators (108, 58) arranged so as to maintain anyway engagement of the respective clutches (38, 24), and therefore of the integral transmission drive, in the disabled condition of the ignition and start switch (310) of the vehicle.

2. Transmission according to claim 1, characterized in that the said fluid actuators (58, 108) are operated by respective solenoid valves (320, 330, 340) controlled by a central electro-pneumatic control unit (62) which is in turn piloted through a manually-operated switch (300) interposed between the said control unit (62) and the said ignition and start switch (310) of the vehicle, the disabled condition of which corresponds to a disactivated condition of the said control unit (62) in which the said solenoid valves (320, 330, 340) are de-energized and the respective fluid actuators (58, 108) are disactivated so as to effect insertion of the integral drive through engagement of the said clutches (28, 34), and in that the said control unit (62) is connected to a vehicle-speed sensor (350) by which insertion of the integral drive through the said manually-operated switch (300) whilst the vehicle is in motion is inhibited if the vehicle speed detected by the said sensor (350) is higher than a predetermined threshold value.

3. Transmission according to claim 2, characterised in that the said control unit (62) is arranged to effect operation of the said solenoid valves (320, 330, 340) according to a sequence such that, when insertion of the integral drive is piloted through the said manually-operated switch (300), engagement of the said secondary clutches (38) is operated subsequently to engagement of the said main clutch (24), while when release of the integral drive is piloted, disengagement of said main and secondary clutches (24, 38) is almost simultaneously operated.

4. Transmission according to Claim 1, characterised in that the two secondary clutches (38) are disposed between the drive shafts (18) of the second pair of wheels (20) and two corresponding output shafts (46) of the secondary differential (22).

5. Transmission according to Claim 1, characterised in that the two secondary clutches (38) are disposed between the drive shafts (18) of the second pair of wheels (20) and the spindles (72) of the wheels (20).

6. Transmission according to Claim 5, characterised in that each of the two secondary clutches (38) comprises a sleeve (40) slidable on its respective drive shaft (18) by means of a splined coupling and engageable with a splined portion (44, 74) of the corresponding output shaft (46) of the secondary differential (22) or the corresponding spindle (72) of the wheel (20), the sleeve (40) having connected thereto a swinging fork element (48, 76) carried by a shaft (52, 78) which is rotated about an axis perpendicular to the axis of the sleeve (40) by the respective pressurised-fluid actuator (58).

7. Transmission according to Claim 6, characterised in that it includes retaining means (64, 80) for keeping the fork (48, 76) in one or other of the positions corresponding to the engaged and disengaged conditions respectively of the sleeve (40).

8. Transmission according to Claim 7, characterised in that the retaining means comprise a finger-like member (64) biased resiliently against the free end of one of the arms (48a) of the fork element (48) provided with a pair of corresponding engagement notches (70).

9. Transmission according to Claim 7, characterised in that the retaining means comprise a ball (80) biased resiliently against an appendage of the yoke (84) of the fork-like element (76) provided with a pair of corresponding engagement notches (86).

10. Transmission according to any one of Claims 1 to 9, characterised in that the fluid actuators (58, 108) are of the vacuum-operated type.

11. Transmission according to Claim 10, characterised in that the main clutch (24) comprises an internally-splined sleeve (100) mounted slidably on the propeller shaft (90) and meshed with a gear wheel (96) carried by the latter, the sleeve (100) being engageable with a gear wheel (98) carried by the power take-off (94), the sleeve (100) being movable axially by means of a swinging fork element (102) carried by a shaft (104) orthogonal to the sleeve (100) and rotated by the pressurised-fluid actuator (108), retaining means (110) being provided for holding the fork (102) in one or other of the positions corresponding to the engaged or disengaged conditions of the sleeve (100).

**Patentansprüche**

1. Allradantrieb für Kraftfahrzeuge mit einer Getriebe-Differentialeinheit (10) für die Übertragung des Antriebs auf ein Paar von Antriebswellen (12), die mit einem ersten Räderpaar (14) des Kraftfahrzeugs verbunden sind, wobei diese Getriebe-Differentialeinheit (10) eine Zapfwelle (94) zur Übertragung der Antriebskraft auf eine Kardanwelle (16) aufweist, die ein zweites Differential (22) antreibt, das zur Übertragung des Antreibs auf ein Paar von Antriebswellen (18) dient, die mit einem zweiten Räderpaar (20) des Kraftfahrzeugs verbunden sind, sowie mit Mittel zum Einschalten und Ausschalten des Antriebs für das zweite Räderpaar (20), die eine extern gesteuerte Hauptkupplung (24) zum Ankuppeln und Abkuppeln der Kardanwelle (16) an die bzw. von der Zapfwelle (94) sowie zwei extern gesteuerte Hilfskupplungen (38) zum wahlweisen Ankuppeln und Abkuppeln der Räder des zweiten Räderpaars (20) an das bzw. von dem zweiten Differential (22) und damit an die bzw. von der Kardanwelle (16), wobei sowohl die Hauptkupplung (24) als auch die beiden Hilfskupplungen (38) durch elektrisch gesteuerte, fluidbetriebene Stellorgane (108, 58) betätigt werden, die derart angeordnet sind, daß bei ausgeschaltetem Zünd- und Startschalter (310) des Kraftfahrzeugs auf jeden Fall das Eingreifen der jeweiligen Kupplungen (38, 24) und damit der Allradantrieb aufrechterhalten wird.

2. Allradantrieb nach Anspruch 1, dadurch gekennzeichnet, daß die fluidbetriebenen Stellorgane (58, 108) jeweils durch Magnetventile (320, 330, 340) betätigt werden, die von einer zentralen elektropneumatischen Steuereinheit (62) gesteuert werden, die ihrerseits über einen manuell betätigten Schalter (300) beeinflußt wird, der zwischen der Steuereinheit (62) und dem Zünd- und Startschalter (310) des Kraftfahrzeugs angeordnet ist und dessen Ausschaltzustand dem deaktivierten Zustand der Steuereinheit (62) entspricht, wobei in diesem Zustand die Magnetventile (320, 330, 340) aberregt und die zugehörigen fluidbetriebenen Stellorgane (58, 108) deaktiviert sind, so daß sie durch das Eingreifen der Kupplungen (28, 34) das Einschalten des Allradantriebs bewirken, und daß die Steuereinheit (62) mit einem Sensor (350) für die Fahrzeuggeschwindigkeit verbunden ist, durch den das Einschalten des Allradantriebs durch den manuell betätigten Schalter (300) während der Bewegung des Fahrzeugs verhindert wird, falls die von dem Sensor (350) ermittelte Fahrzeuggeschwindigkeit über einem vorbestimmten Schwellwert liegt.

3. Allradantrieb nach Anspruch 2, dadurch gekennzeichnet, daß die Steuereinheit (62) die Magnetventile (320, 330, 340) in einer solchen Folge betätigt, daß beim Einschalten des Allradantriebs durch den manuell betätigten Schalter (300) das Einrücken der Hilfskupplungen (38) im Anschluß an das Einrücken der Hauptkupplung (24) erfolgt, während beim Ausschalten des Allradantriebs das Auskuppeln der Hauptkupplung und der Hilfskupplungen (24, 38) fast gleichzeitig erfolgt.

4. Allradantrieb nach Anspruch 1, dadurch gekennzeichnet, daß die beiden Hilfskupplungen (38) zwischen den Antriebswellen (18) des zweiten Räderpaars (20) und zwei entsprechenden Ausgangswellen (46) des zweiten Differentials (22) angeordnet sind.

5. Allradantrieb nach Anspruch 1, dadurch gekennzeichnet, daß die beiden Hilfskupplungen (38) zwischen den Antriebswellen (18) des zweiten Räderpaars (20) und den Achswellen (72) der Räder (20) angeordnet sind.

6. Allradantrieb nach Anspruch 5, dadurch gekennzeichnet, daß jede der Hilfskupplungen (38) eine Buchse (40) aufweist, die mit einem genuteten Kupplungsabschnitt auf der zugehörigen Antriebswelle gleitet und mit einem genuteten Abschnitt (44, 74) der zugehörigen Ausgangswelle (46) des zweiten Differentials (22) oder der Achswelle (72) des zugehörigen Rades (20) in Eingriff bringbar ist, und daß diese Buchse (40) mit einem von einer Welle (52, 78) getragenen schwenkbaren Gabelelement (48, 76) gekoppelt ist, das durch das zugehörige fluidbetriebene Stellorgan (58) um eine zur Achse der Buchse (40) senkrechte Achse drehbar ist.

7. Allradantrieb nach Anspruch 6, dadurch gekennzeichnet, daß Haltemittel (64, 80) vorgesehen sind, die das Gabelelement (48, 76) in der einen oder anderen der beiden Positionen halten, die dem eingekuppelten bzw. dem ausgekuppelten Zustand der Buchse (40) entsprechen.

8. Allradantrieb nach Anspruch 7, dadurch gekennzeichnet, daß die Haltemittel ein Fingerteil (64) aufweisen, das elastisch gegen das freie Ende eines der Arme (48a) des mit einem Paar entsprechender Eingreifkerben (70) versehenen Gabelelements (48) vorgespannt ist.

9. Allradantrieb nach Anspruch 7, dadurch gekennzeichnet, daß die Haltemittel eine Kugel (80) aufweisen, die elastisch gegen einen Ansatz (84) des mit einem einem Paar entsprechender Eingreifkerben (86) versehenen Gabelelements (76) vorgespannt ist.

10. Allradantrieb nach einem der Ansprüche 1 bis 9, dadurch gekennzeichnet, daß die fluidbetriebenen Stellorgane (58, 108) vakuumbetätigte Stellorgane sind.

11. Allradantrieb nach Anspruch 10, dadurch gekennzeichnet, daß die Hauptkupplung (24) eine mit einer Innennutung versehene Buchse (100) aufweist, die auf der Kardanwelle (90) gleitet und mit einem von dieser getragenen Zahnrad (96) kämmt, daß die Buchse (100) mit einem von der Zapfwelle (94) getragenen Zahnrad (98) in Eingriff bringbar und mit Hilfe eines von einer senkrecht zu der Buchse (100) verlaufenden Welle (104) getragenen, schwenkbaren Gabelelements (102) in axialer Richtung verschiebbar und von dem fluidbetriebenen Stellorgan (108) drehbar ist, und daß Haltemittel (110) vorgesehen sind, die das Gabelelement (102) in der einen oder anderen der beiden Positionen halten, die dem eingekuppelten bzw. dem ausgekuppelten Zustand der Buchse (100) entsprechen.

## Revendications

1. Transmission intégrale pour véhicules automobiles, comprenant une unité boîte de vitesses-différentiel (10) destinée à transmettre la force motrice à une paire de demi-arbres (12) reliés à une première paire de roues (14) du véhicule, l'unité boîte de vitesses-différentiel (10) étant équipée d'une prise de force (94) destinée à transmettre la force motrice à un arbre de transmission (16) qui entraîne un différentiel secondaire (22) destiné à transmettre la force motrice à une paire de demi-arbres (18) reliés à une deuxième paire de roues (20) du véhicule automobile, et des moyens permettant d'embrayer et de débrayer la transmission de la force motrice à la deuxième paire de roues (20), ces moyens comprenant un

embrayage principal (24) à commande extérieure, destiné à accoupler et à désaccoupler l'arbre de transmission (16) et la prise de force (94), et deux embrayages secondaires (38) à commande extérieure, destinés à accoupler et désaccoupler sélectivement les roues de la deuxième paire (20) par rapport au différentiel secondaire (22) et à l'arbre de transmission (16), l'embrayage principal (24) et les deux embrayages secondaires (38) étant actionnés par des actionneurs à fluide à commande électrique (108, 58) agencés de manière à maintenir de toute façon l'état embrayé des embrayages respectifs (38, 24) et, par conséquent l'engagement de la transmission intégrale dans l'état de repos de l'interrupteur d'allumage et de démarrage (310) du véhicule.

2. Transmission selon la revendication 1, caractérisée en ce que lesdits actionneurs à fluide (58, 108) sont actionnés par des électrovalves respectives (320, 330, 340) commandées par une unité de commande centrale électropneumatique (62), laquelle est à son tour pilotée par un interrupteur (300) commandé manuellement, qui est interposé entre ladite unité de commande (62) et ledit interrupteur d'allumage et de démarrage (310) du véhicule, dont l'état de repos correspond à un état désactivé de ladite unité de commande (62), dans lequel lesdites électrovalves (320, 330, 340) sont désexcitées et les actionneurs à fluide respectifs (58, 108) sont désactivés de manière à déterminer l'engagement de la transmission intégrale par l'embrayage desdits embrayages (28, 34), et en ce que ladite unité de commande (62) est reliée à un capteur de vitesse du véhicule (350) au moyen duquel l'engagement de la transmission intégrale au moyen dudit interrupteur à commande manuelle (300) alors que le véhicule est en mouvement est inhibé si la vitesse du véhicule captée par ledit capteur (350) est supérieure à une valeur de seuil prédéterminée.

3. Transmission selon la revendication 2, caractérisée en ce que ladite unité de commande (62) est agencée pour déterminer la manoeuvre desdites électrovalves (320, 330, 340) selon une séquence telle que, lorsque l'engagement de la transmission intégrale est commandé par l'intermédiaire dudit interrupteur (300) à commande manuelle, l'embrayage desdits embrayages secondaires (38) est effectué après l'embrayage dudit embrayage principal (24) tandis que, lorsque la suppression de la transmission intégrale est commandée, le débrayage dudit embrayage principal et celui desdits embrayages secondaires (24, 38) s'effectuent presque simultanément.

4. Transmission selon la revendication 1, caractérisée en ce que les deux embrayages secondaires (38) sont disposés entre les demi-arbres (18) de la deuxième paire de roues (20) et deux arbres de sortie correspondants (46) du différentiel secondaire (22).

5. Transmission selon la revendication 1, caractérisée en ce que les deux embrayages secondaires (38) sont disposés entre les demi-arbres (18) de la deuxième paire de roues (20) et les fusées (72) des roues (20).

6. Transmission selon la revendication 5, caractérisé en ce que chacun des deux embrayages secondaires (38) comprend un manchon (40) qu'on peut faire coulisser sur son demi-arbre (8) respectif, au moyen d'un accouplement cannelé, et qui peut être mis en prise avec une portion cannelée (44, 74) de l'arbre de sortie (46) correspondant du différentiel secondaire (22) ou de la fusée correspondante (72) de la roue (20), cependant que, au manchon (40), est relié un élément formant fourchette oscillante (48, 76) porté par un arbre (52, 78) qui tourne autour d'un axe perpendiculaire à l'axe du manchon (40), sous l'action d'un actionneur respectif à fluide sous pression (58).

7. Transmission selon la revendication 6, caractérisée en ce qu'elle comprend des moyens de verrouillage (64, 80) destinés à maintenir la fourchette (48, 76) dans l'une ou l'autre des positions qui correspondent respectivement à l'état en prise et à l'état hors de prise du manchon (40).

8. Transmission selon la revendication 7, caractérisée en ce que les moyens de verrouillage comprennent un élément (64) en forme de doigt qui est pressé élastiquement contre l'extrémité libre de l'une des branches (48a) de l'élément formant fourchette (48), lequel est muni de deux encoches de verrouillage correspondantes (70).

9. Transmission selon la revendication 7, caractérisée en ce que les moyens de verrouillage comprennent une bille (80) rappelée élastiquement contre un prolongement de la base (84) de l'élément (76) en forme de fourchette, lequel est muni d'une paire d'encoches de verrouillage correspondantes (86).

10. Transmission selon une quelconque des revendications 1 à 9, caractérisée en ce que les actionneurs à fluide (58, 108) sont du type actionné par dépression.

11. Transmission selon la revendication 10, caractérisée en ce que l'embrayage principal (24) comprend un manchon cannelé intérieurement (100) monté coulissant sur l'arbre de transmission (90) et mis en prise avec une roue dentée (96) portée par ce dernier, le manchon (100) pouvant être mis en prise avec une roue dentée (98) portée par la prise de forme (94), le manchon (100) pouvant se déplacer axialement sous l'action d'un élément formant fourchette·oscillante (102) porté par un arbre (104) orthogonal au manchon (100) et qui est mis en rotation par l'actionneur à fluide sous pression (108), des moyens de verrouillage (110) étant prévus pour maintenir la fourchette (102) dans l'une ou l'autre des positions qui correspondent respectivement à l'état embrayé et à l'état débrayé du manchon (100).

FIG. 1

# FIG. 2

# FIG. 5

EP 0 204 665 B1

FIG. 4

FIG. 3

3

# FIG. 7

# FIG. 6

FIG. 8